# EUROPEAN PATENT SPECIFICATION

(11) **EP 1 566 778 B1**
(45) Date of publication and mention of the grant of the patent: **02.05.2012**
(21) Application number: 05003921.3
(22) Date of filing: 23.02.2005
(51) Int. Cl.: G07F 17/32, A63F 3/00

(54) **Gaming machine**
Spielgerät
Machine de jeu

(30) Priority: 23.02.2004 JP 2004047114; 12.07.2004 JP 2004204651; 24.08.2004 JP 2004244125
(43) Date of publication of application: 24.08.2005
(73) Proprietor: Universal Entertainment Corporation, Tokyo (JP)
(72) Inventor: Okada, Kazuo, Aruze Corp., Koto-ku Tokyo 135-0063 (JP); Takeda, Kengo, Aruze Corp., Koto-ku Tokyo 135-0063 (JP)
(74) Representative: Grünecker, Kinkeldey, Stockmair & Schwanhäusser

(56) References cited:
- WO-A-00/16863
- US-A- 5 669 817
- US-B1- 6 514 140

## Description

### CROSS-REFERENCES TO THE RELATED APPLICATIONS

This application is based upon and claims the priorities from a prior Japanese patent application No. 2004-047115, filed on February 23, 2004, in Japan, a prior Japanese patent application No. 2004-204651, filed on July 12, 2004, and a prior Japanese patent application No. 2004-244124, filed on August 24, 2004,in Japan.

This application is related to a co-pending U.S. patent application referred to as a prior Japanese patent application No.2004-042697 filed in Japan on February 19, 2004 and a co-pending U.S. patent application referred to as a prior Japanese patent application No.2004-047166 filed in Japan on February 24, 2004 and a prior Japanese patent application No.2004-111401 filed in Japan on April 5, 2004.

### BACKGROUND OF THE INVENTION

### FIELD OF THE INVENTION:

The present invention mainly relates to a gaming machine, and more particularly to a gaming machine which specifies a position of a player's hand, performs a control of a game based on this position, and specifies the player by detecting the position from which the hand extends.

### 2. RELATED ART:

With respect to a gaming machine which is installed in a game arcade or a gaming arena, recently, there has been observed the gaming machine which provides a game performed by a plurality of players using the same game table simultaneously such as roulette, poker, bridge or baccarat.

Such a gaming machine is provided with manipulating parts the number of which corresponds to the number of players and the players perform the game by manipulating the corresponding manipulating parts.

For example, in a gaming device which displays a gaming screen on a large-sizedpanel display, there has been proposed a gaming machine in which players indicate the game using terminal devices provided for respective players (Japanese Laid-open Patent Publication 2002-301264 (Fig. 1, steps [0063], [0066])).

In such an indication, there may be a case in which it is necessary to detect which positions are indicated. For example, there may be a case in which a player wants to perform the indication of various image processing such as a highlight display or an enlarged display using the indicator as a trigger for supporting the understanding of the players. Here, the highlight display is a display which changes the color of a sentence pointed out by the indicator and the enlarged display is a display which displays a chart in an enlarged manner.

As a technique which satisfies such a request, there has been proposed a technique in which indication positions in an image region which constitutes an image displayed on a screen is detected such that the image region is photographed and an image obtained by photographing is subjected to edge processing (for example, Japanese Laid-open Patent Publication 2002-301264(Fig. 1, steps [0063], [0066])).

### SUMMARY OF THE INVENTION

In the gaming machine in which a plurality of players play a game using the same table simultaneously such as roulette or a card game, there has been a demand for a game in which a plurality of players advance the game by respectively indicating given places (for example, positions where chips are bet) using their hands on a common game table such as actual roulette or card game.

As a method which allows the plurality of players to use the common game table, there may be considered a method which specifies the players in such a manner that the playing order is regulated so that players play the game one after another. However, in such a method, it is difficult to provide a situation in which the plurality of players enjoys the game by extending their hands on one game table.

Accordingly, it is an object of the present invention to provide a gaming machine which can overcome the above-mentioned drawbacks and allows a plurality of players to advance a game by giving indications on a table screen which constitutes a game table using their hands.

This object is achieved by the present invention as claimed in the independent claims. Advantageous and preferred embodiments of the present invention are defined by the dependent claims.

The present invention proposes a gaming machine which allows a plurality of players to perform a game using the same game table simultaneously. The players perform the game at positions arranged around a game table (for example, a betting table of roulette, a baccarat table of baccarat) provided to the gaming machine. The positions where the player plays the game are fixed by arranging chairs or the like to predetermined positions around the game table.

According to an example, it is provided a gaming machine characterized by including a game table display means (an image display unit) which displays an image corresponding to a game table, a position detecting means (a position detecting part) which detects positions of indicators on the game table display means, a player specifying means (a player specifying part) which specifies players corresponding to the indicators based on the positional relationship between the positions of the indicators detected by the position detecting means and the game table display means, and a control means (a game control part) which performs a control of the game based on information on the positions detected by the position detecting means and information on the players specified based on the player specifying means.

According to an example of a gaming machine which allows the plurality of players to advance the game by simultaneously indicating the betting positions or the like on the table screen which constitutes one game table, it is possible to specify which players perform the betting and which positions the players bet, and an amount (the number of bets) which the players bet.

According to a further example, it is possible for players to advance a game while actually performing the indication on the game table with their hands.

Further, according to a further example, in the gaming machine in which the plurality of players advance the game while indicating the betting positions or the like on the table screen which constitutes one game table simultaneously, it is possible to specify to which positions the players bet and the amount (the number of bets) which the players bet.

According to another example, compared to a case in which the number of bets is determined using the change of the positions of the indicators (for example, when the number that the player taps the table screen is treated as the number of bets, the vertical movement of the indicator is detected), it is possible to obtain the number of bets more accurately based on the inputting from the player terminal units and can be reflected on the advancement of the game.

Still further, according to another example, the result of the game is clearly recognized not only by the players but also by bystanders around the gaming machine thus promoting the desire of the bystanders to take part in the game.

### BRIEF DESCRIPTION OF THE DRAWINGS

Fig. 1 is a view showing a basic constitutional example of an image display system;
Fig. 2 is a view showing another basic constitutional example of the image display system;
Fig. 3 is a perspective view showing an appearance of a gaming machine which uses the image display system;
Fig. 4 is a view showing an arrangement example of an optical system which constitutes the image display system;
Fig. 5 is a block diagram showing an electric constitutional example of the gaming machine;
Fig. 6 is a view showing a screen example displayed on a front display;
Fig. 7 is a view showing a screen example displayed on a transmissive screen (a table screen) of the gaming machine;
Fig. 8 is an example of a back image for position detection;
Fig. 9 is a flowchart showing main processing of the gaming machine;
Fig. 10 is a view showing an example of player specifying processing;
Fig. 11A and Fig. 11B are views showing an example of a player specifying region in which Fig. 11A is a plan view of the gaming machine and Fig. 11B is a front view of the gaming machine;
Fig. 12 is a plan view of the gaming machine showing an example of the player specifying region;
Fig. 13 is a plan view of the gaming machine showing an example of the player specifying region;
Fig. 14 is a block diagrams showing another constitution example of the gaming machine;
Fig. 15 is a view showing a screen example indicated on the transmissive screen (screen table) of the gaming machine;
Fig. 16 is a view showing a screen example indicated on the transmissive screen (screen table) of the gaming machine; and
Fig. 17 is a view showing a screen example indicated on the transmissive screen (screen table) of the gaming machine.

### DESCRIPTION OF THE PREFERRED EMBODIMENTS

Hereinafter, embodiments of the present invention are explained in conjunction with drawings.

### [First Embodiment]

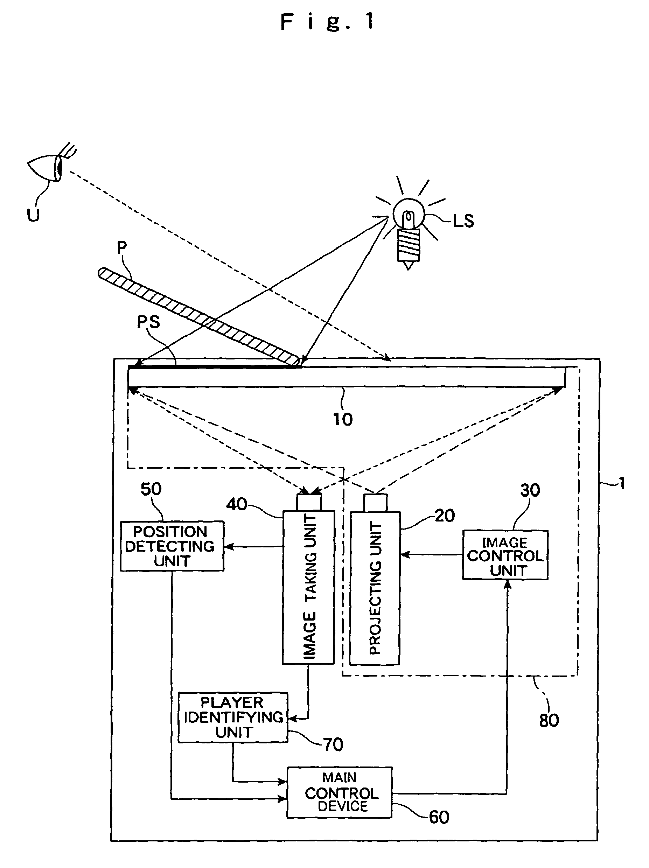

First of all, the first embodiment of the present invention according to the present invention is explained in conjunction with Fig. 1. Fig. 1 is a view showing a basic constitutional example of an image display system according to the first embodiment of the present invention.

The image display system 1 includes a focusing unit 10, a image control unit 30 which supplies image data, a projecting unit 20 which projects images to a front surface of the focusing unit 10, an image taking unit 40 which photographs the focusing unit 10 on which a shade PS of an indicator P is formed from a back surface of the screen unit 10, a position detecting unit 50 which receives image data of the back surface of the screen unit 10 outputted from the image taking unit 40, determines a position of the shade PS of the indicator P based on the image data, and outputs positional information. A player specifying unit 70 which specifies a player corresponding to the shade PS based on the image data from the image taking unit 40, and an main control device 60 which instructs an image to be projected to the screen unit 10 to the image control unit 30 based on the positional information from the position detecting unit 50 and the information of the player specifying unit 70 which specifies the player. The screen unit 10, the projecting unit 20 and the image control unit 30 cooperatively function as an image display unit 80 which displays an image such as a game table to the player.

The screen unit 10 has a light transmitting property and allows light from a front surface and a back surface thereof to pass therethrough. The screen unit 10 is, for example, a transmissive screen for a liquid crystal projector. When a user U observes an screen unit 10 from the front surface of the screen unit 10, an optical image which is radiated from the back surface side of the screen unit 10 by the projecting unit 20 focuses an image on the screen unit 10. As a result, the user U can observe an image corresponding to the image data which the projecting unit 20 radiates.

The indicator P is an object or a means which the user uses for indicating a desired position of the image displayed on the front surface of the screen unit 10 and is, for example, a hand (including an arm portion) of the user U himself/herself, an indicating rod or the like, for example. The indicator P is illuminated by a light source LS and hence, a shade PS of the indicator P is reflected on the screen unit 10. Since the screen unit 10 has the light transmitting property, even when the screen unit 10 is observed from a back surface thereof, the shade PS is observed. Here, the light source LS may be a lateral light source such as sunbeams or a lighting equipment which is provided in an environment in which the image display system 1 is arranged. Further, the light source LS may be a lighting equipment such as a fluorescent lamp mounted in the image display system 1.

The projecting unit 20 is an optical projecting system which is capable of projecting an optical image to the screen unit 10 based on the image data and is a liquid crystal projector (DLP (Digital Liquid Protector)), for example. The light source LS is preferably a light source which emits a white light. By allowing the white light to transmit screen unit 10, the shade PS of the indicator P is observed in black on the back surface of the screen unit 10 and, at the same time, regions other than the shade PS are observed in white whereby an image equivalent to a white/black image can be obtained.

The image taking unit 40 is a unit which generates the image data of the back surface of the screen unit 10 and is, for example, a digital camera, a digital video camera, a CCD camera unit, or the like.

The image control unit 30, the position detecting unit 50, the main control device 60 and the player specifying unit 70 are respectively constituted of a device which includes a central processingunit (CPU), amainmemory (RAM), a read only memory (ROM), an input/output device (I/O), and an external storage device such as a hard disc device or the like when necessary. That is, these units may be formed of an information processing unit such as a computer, a workstation, an LSI chip or the like. In the above-mentioned ROM or the hard disc device, a program which allows the information processing device to function as the image control unit 30, the position detecting unit 50 or the main control device 60 is stored. By storing this program in the main memory and by allowing the CPU to execute this program, the image control unit 30, the position detecting unit 50 or the main control device 60 can be realized. Further, the above-mentioned program is not always necessary to be stored in the storage device in the inside of the information processing device and may be provided from an external device (for example, an ASP (a server of an application service provider or the like)) and may be stored in the main memory.

The image control unit 30, the position detecting unit 50, the main control device 60, and the player specifying unit 70 may be respectively realized by individual information processing device or one information processing device may be configured to function as the image control unit 40, the position detecting unit 50, the main control device 60 and the player specifying unit 70.

The image control unit 30 stores a plurality of image data to be displayed to the user, wherein the necessary image data is read out in response to a command from the main control device 60 and is subjected to the image processing when necessary, and is provided to the projecting unit 20.

The position detecting unit 50 receives the image data of the back surface of the screen unit 10 from the image taking unit 40, detects the position of the shade PS of the indicator P by performing the necessary image processing on the image data, and outputs the detected position as the positional information. As the image processing, threshold value processing for performing the region extracting of the shade PS, the edge detection for extracting a profile of the shade PS or the like is considered. The position detecting unit 50 generates the positional information of the shade PS by making use of the coordinate positional information of pixels of a shade region or a profile line obtained by these threshold value processing or the edge detection.

The main control device 60 has a function of controlling the operation of the whole image display system 1, wherein the main control device 60 instructs the image data to be outputted and the timing at which the image data is outputted or the like the image control unit 30 and, at the same time, instructs the image control unit 30 to change the image data in response to the positional information of the shade PS from the position detecting unit 50.

The player specifying unit 70 checks whether the shades PS fall within regions for specifying the players, wherein the regions are predetermined on the table screen for respective players (also referred to as "player specifying regions"). Thereafter, the player specifying unit 70 specifies the players corresponding to the shades PS as a result, and outputs the information indicating the players. When the player specifying region is a region in which the indicator never fails to pass when the player indicates on the input region on the table screen allocated to himself/herself with the indicating poriton P, that is, the region which is determined based on the sitting position given to the player, the shape and the size of the gaming machine, the expected player's physical structure of the player and the like.

### [Modification of the first embodiment]

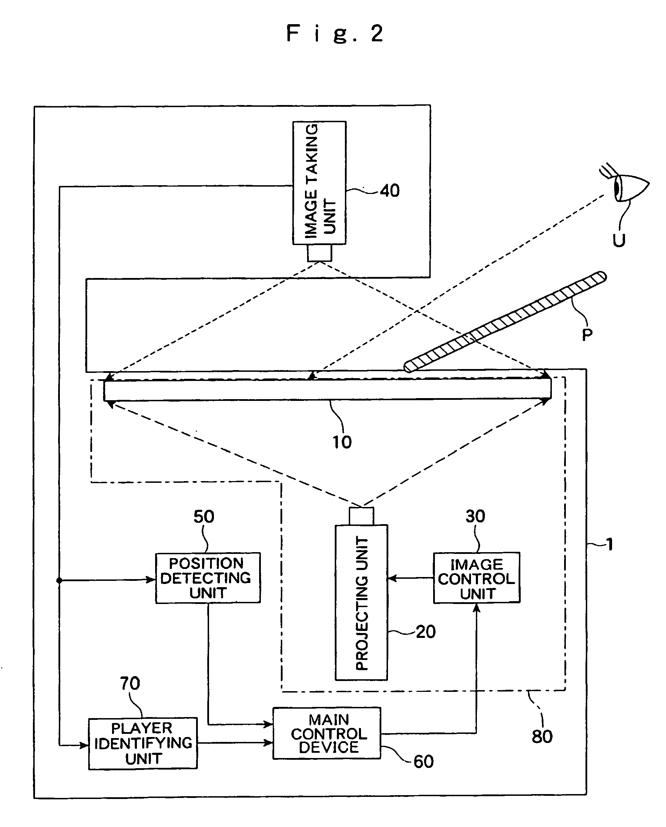

Fig. 2 shows a modification of the image display system 1 shown in Fig. 1. In the system shown in Fig. 1, the position of the indicator P is photographed from the lower side of the screen unit 10 and the detection of the position is performed using the image which contains the shade of the indicator P. However, in the modification shown in Fig. 2, the image taking unit 40 is arranged above the screen unit 10 and the detection of the position is performed by directly photographing the indicator P. That is, the image display system 1 according to this modification is the constitution which performs the detection of the position using an actual image of the indicator P in place of the shade of the indicator P. It is also possible to realize the image display system with such a constitution.

According to the above-mentioned embodiment, in the gaming machine which allows the plurality of players to advance the game while indicating the betting positions or the like on the table screen which constitutes one game table simultaneously, it is possible to specify which positions the players bet.

Next, the specific embodiments according to the present invention are explained

### [First specific embodiment]

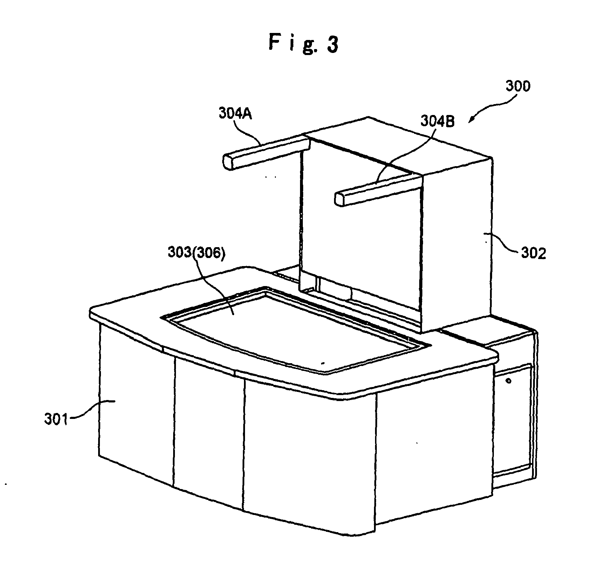

Fig. 3 is a perspective view of an appearance of a gamingmachine which uses the image display system 1 according to the present invention. Here, although the gaming machine is explained as a device which allows users to play a baccarat game, the gaming machine according to this embodiment is not limited to the baccarat game. That is, the gaming machine according to this embodiment is applicable to any game such as poker, black jack, bridge or roulette or the like so long as the image display system 1 according to the present invention is applicable.

The gaming machine 300 according to this embodiment includes a table part 301 and a front display 302 which is mounted on a rear portion of the table part 301.

Table part 301 houses the optical system and information processing equipment which constitute the image display system 1 therein. An opening is formed in a center portion of an upper surface of the table part 301 and a transmissive screen 303 which constitutes the screen unit 10 is extended over the opening. The transmissive screen 303 functions as an upper display (hereinafter referred to as "table screen 306") which constitutes the image display unit 80 which displays the game image to the users. Here, an upper portion of the transmissive screen 303 is protected by a transparent plate member such as a glass panel thus preventing the transmissive screen 303 from being broken or smeared even when the player touches the table screen 306 with his/her hand which constitutes the indicator P.

Fluorescent lumps 304A, 304B which constitute the light sources LS are formed both ends of an upper portion of the front display 302 and hence, the shade PS of the indicator P is projected on the transmissive screen 303. Here, the arrangement position of the fluorescent lumps 304A, 304B is not always limited to the mode shown in Fig. 3. That is, the fluorescent lumps 304A, 304B may be arranged at any position so long as the shade PS of the indicator P is projected on the transmissive screen 303. Further, when there is illumination which allows the shade PS of the indicator P to be projected on the transmissive screen 303 at locations where the gaming machine 300 is installed, the fluorescent lumps 304A, 304B may not be provided.

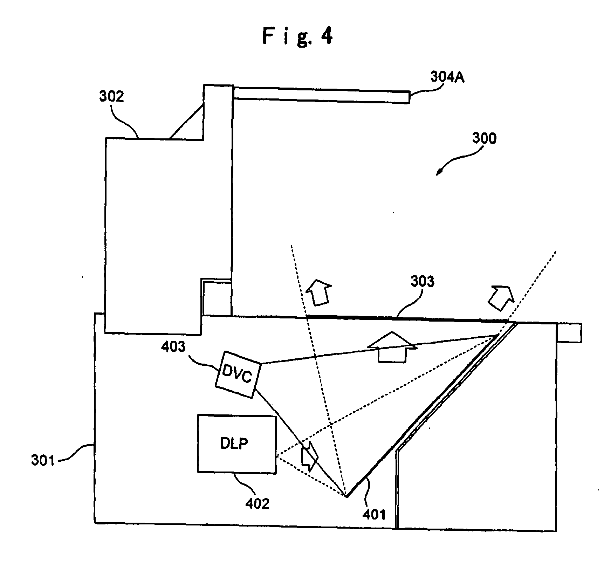

Fig. 4 is a view showing an arrangement example of the optical system which constitutes the image display system 1 housed in the inside of the table part 301.

To a center portion of the table part 301, the transmissive screen 303 is fixed in a state that the transmissive screen 303 is protected by a glass plate or the like. A mirror 401 is arranged in an inclined state below the transmissive screen 303. At a position which faces the mirror 401, a digital liquid crystal projector (hereinafter referred to as "DLP") 402 which corresponds to the projecting unit 20 and a digital video camera (DVC) 403 which corresponds to the image taking unit 40 are fixed. The mirror 401 reflects the image radiated from the DLP 402 toward the transmissive screen 303 and the distance between the mirror 401 and the DLP 402 and an angle of a reflection surface are adjusted so as to project the image with a desired size. In the same manner, the mirror 401 is arranged in a state that the mirror reflects the image of the back surface of the transmissive screen 303 toward the digital video camera 403 and the distance between the mirror 401 and the digital video camera 403 and an angle of a reflection surface with respect to the transmissive screen 303/the digital video camera 403 is adjusted such that the digital video camera 403 can photographs the back surface of the transmissive screen 303.

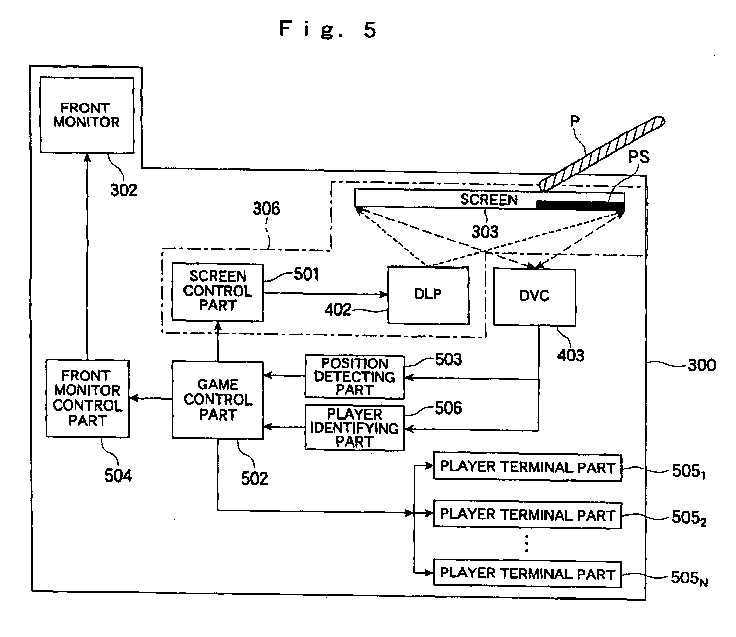

Next, an electrical constitutional example of the gaming machine 300 is explained. Fig. 5 is a block diagram showing the electrical constitutional example of the gaming machine 300.

As shown in Fig. 5, the gaming machine 300 is provided with the transmissive screen 303. The DLP 402 which constitutes the projecting unit 20 optically projects the image related to the game to the transmissive screen 303. A screen control part 501 which constitutes the image control unit 30 supplies the image data (hereinafter referred to as "front surface image data") to the DLP 402. The digital video camera 403 which constitutes the image taking unit 40 photographs the back surface of the transmissive screen 303 and outputs image data (also referred to as "back surface image data") obtained by photographing the back surface of the transmissive screen 303. A position detecting part 503 which constitutes the position detecting unit 50 detects the position indicated by the indicator P by processing this back surface image data and outputs the positional information. The player specifying part 506 detects whether the shade PS is included in any one of player specifying regions which are preliminarily determined by performing the image processing of the image data from the video camera 403. When the shade PS is included in any one of the players specifying regions, a player identifier which corresponds to the player specifying region is outputted. A game control part 502 which constitutes the whole control unit 60 has a function of controlling the operation of the gaming machine 300. The game control part 502 instructs which image data is to be outputted to the screen control part 501 and at which timing the image data is outputted. At the same time, the game control part 502 receives the positional information from the position detecting unit 50 and the player's identifier from the player specifying part 506. The operation of the gaming machine 300 is controlled based on this positional information.

The front display control part 504 outputs image data of the image to be displayed on the front display 302 (hereinafter referred to as "front image data") in response to the instruction from the game control part 502. The front display 302 receives and displays the front image data. The image displayed on the front display 302 informs, in cooperation with the image displayed on the transmissive screen 303, that is, the table screen 306, the situation, the progress and the like of the game to the users.

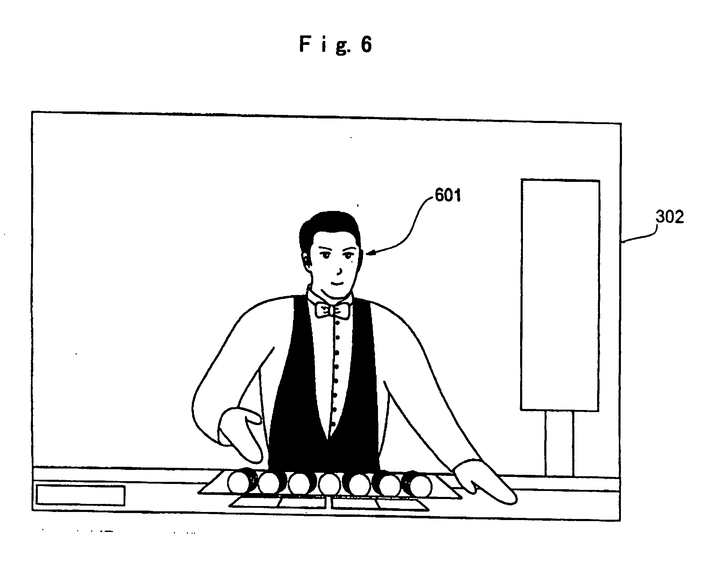

In this embodiment, a dealer of a baccarat is displayed as a moving image on the front display 302. Fig. 6 is a screen example displayed on the front display 302. On the screen, the dealer 601 is displayed. That is, the mode in which the dealer distributes cards, draws cards and delivers chips in accordance with the progress of the game is displayed on the screen and hence, it is possible to obtain an effect as if the player is actually playing the baccarat with an actual dealer.

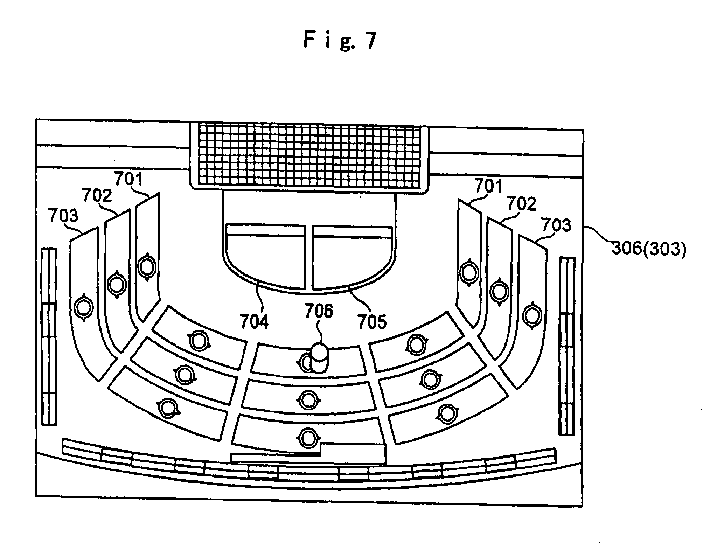

Next, a screen example displayed on the table screen 306 (transmissive screen 303) is explained. Fig. 7 is a screen example displayed on the table screen 306 (transmissive screen 303) of the gaming machine 300. In this example, a screen which imitates a baccarat table is displayed on the table screen 306. On the baccarat table illustrated in the example, regions 701, 702, 703 for betting to "BANKER", "PLAYER", "DRAW" are displayed for five respective players. By allowing the player to indicate any one of the regions 701, 702, 703 using his/her hand which constitutes the indicator P or the like, the information on which one of the "BANKER", "PLAYER", "DRAW" the player bets is inputted to the gaming machine 300. Here, the number of chips, an amount of money and the number of credits for betting can be decided by the player using a betting button of a player terminal part 505 described later. A pile of chips 706 which each player possesses can be also displayed on the table screen 306. When the player instructs his/her betting to any one of the "BANKER", "PLAYER", "DRAW" using the indicator P, the image is changed to allow the table screen 306 to perform the display in which the number of chips which are bet are moved to any one of the regions 701, 702, 703 which are designated by the indicator P from a pile of chips in front of the player.

Further, the table screen 306 includes regions 704, 705 to which the dealer 601 distributes cards of BANKDER and PLAYER and images of cards are displayed on these regions 704, 705.

Returning back to Fig. 5, the electrical constitutional example of the gaming machine 300 is further explained.

To the game control part 502, a plurality of player terminal parts 505₁ to 505_{N} are connected. Each player terminal part 505 is a terminal which receives coins, bills, prepaid cards, credit cards or the like and changes them to credits (medals /coins) which can be used in the gaming machine 300. The player terminal part 405 also has a delivery function of paying out the credits which the player terminal part 405 possesses in response to the payout indication from the player at a point of time that the payout indication is made and a bet inputting function for determining the number of bets, an amount of money and the number of credits in the game. The player performs the game using this player terminal part 505 and the indicator P.

Next, the processing which detects a position of the user's hand which constitutes the indicator P based on the back surface image data of the back surface of the transmissive screen 303 is explained.

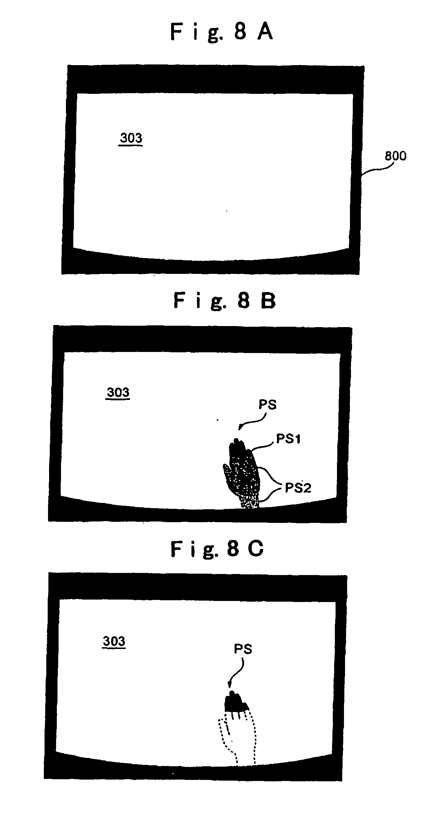

Fig. 8A shows a state in which the shade PS of the indicator P is not projected to the transmissive screen 303 and shows an example of an image which the video camera 403 photographs the back surface of the transmissive screen 303 by way of the mirror 401. The video camera 403 is adjusted to photograph not only the transmissive screen 303 but also a peripheral portion 800 which surrounds the transmissive screen 303. The peripheral portion 800 is, for example, a fixed frame which is provided for fixing the transmissive screen 303 to a top plate of the table part and is preferably colored in black or in a dark color close to black.

When viewed with naked eyes, there may be a case that the image which is displayed on the front surface of the transmissive screen 303 shown in Fig. 7 also appears thin. Accordingly, the exposure of the video camera 403 is adjusted such that the image displayed on the front surface of the transmissive screen 303 is changed to white in color and disappears. Here, when the video camera 403 has the automatic exposure adjusting function, since the exposure is adjusted in conformity with the peripheral portion 800 which is colored in black or in the dark color close to black and hence, it is possible to automatically exclude the image displayed on the front surface of the transmissive screen 303 without performing the exposure adjustment particularly.

Fig. 8B shows a state in which the shade PS of the indicator P is projected to the transmissive screen 303, and also shows an example of an image which the video camera 403 photographs the back surface of the transmissive screen 303 by way of the mirror 401. In the image, the shade PS of the hand which constitutes the indicator P is present on the transmissive screen 303. In this embodiment, the shade PS is constituted of an umbra PS1 which is a thick shade and a penumbra PS2 which is a thin shade. The umbra PS1 and the penumbra PS2 are formed due to the difference in distance between the transmissive screen 303 and the hand. The shade of a front portion (distal end side) of the hand which is close to the transmissive screen 303 forms the umbra PS1 and the shade of a rear portion (arm side) of the hand which is remote from the transmissive screen 303 forms the penumbra PS2. It is possible to determine the distal end of the indicator P based on the contrast of these shades.

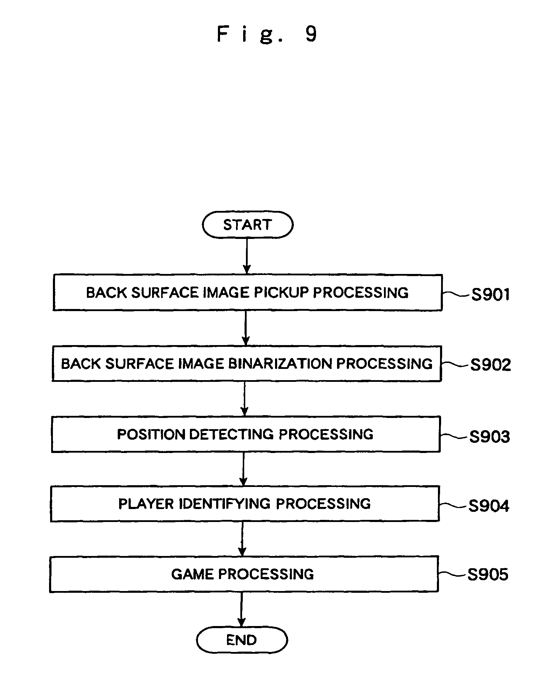

Fig. 9 is a flow chart showing an example of position detecting processing which performs the position detection of the indicator P and the player specifying processing using the back surface image data.

First of all, the screen back surface photographing processing is performed (step S901). That is, the video camera 403 photographs the back surface of the transmissive screen 303 by way of the mirror 401 and outputs the image as shown in Fig. 8B as the back surface image data to the position detecting part 503.

Upon receiving the back surface image data, the position detecting part 503 performs the binarization processing of the back surface image data (step S902). Fig. 8C is an image view which displays the back surface image data after the binarization processing. With respect to the shade PS of the indicator P, the thin portion such as the penumbra PS2 is eliminated and the distal end portion of the indicator P is left and hence, it becomes clear which position the indicator P is indicating. In performing the binarization processing, a proper threshold value is set to enable the specifying of the distal end portion of the indicator P. Since the proper value of the threshold value is changed depending on the environment around the gaming machine 300 (brightness of the peripheral illumination or the like), an operation test may be performed after installing the gaming machine 300 so as to find out the proper threshold value.

Next, the position detecting part 503 performs the position detecting processing based on the back surface image data after the binarization processing (step S903). The position detecting part 503 obtains the coordinates value (x, y values) of pixels which have black values based on the back surface image data after binarization processing and generates the positional information based on the obtained coordinate values. The positional information may be the coordinate value of the pixel which constitutes a peak of the distal end portion. Alternatively, an average value or a center value of the coordinate values of all pixels which possess black values may be selected.

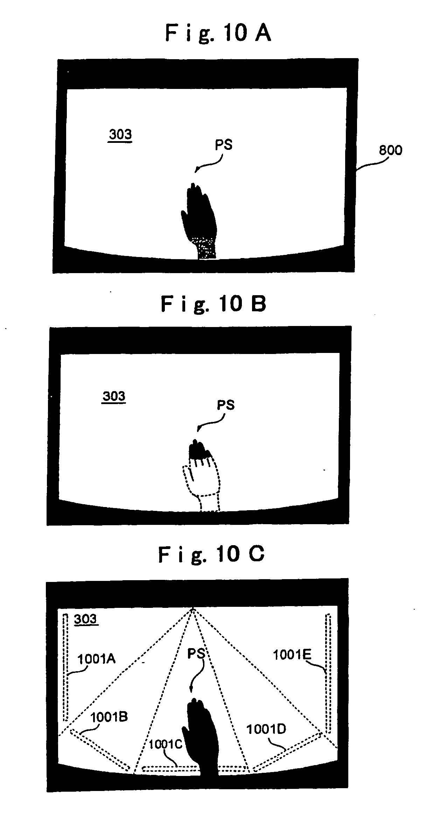

Next, the player specifying part 506 performs the player specifying processing (step S904). Fig. 10 is a view for explaining an example of processing for specifying the player based on the shade PS by the player specifying part 506. Fig. 10A shows a back surface image of the transmissive screen 303 photographed by the DVC 403. With respect to the shade PS of the hand which constitutes the indicator P, since the distal end is positioned close to the table screen 306, the shade PS forms a dark shade. On the other hand, the shade PS at the proximal end side is thin. Fig. 10B is an image of the back surface image data of the transmissive screen 303 after performing the binarization processing using the position detecting part 503. In this example, to enable the position detection of only the distal end portion of the indicator P, the threshold value is set to leave only the black region as the shade while discarding the penumbra portion and other portions. On the other hand, the player specifying part 506 sets the threshold value and performs the binarization processing such that the not only the distal end portion but also the penumbra portion and other portions remains as the shade to enable the recognition of the whole indicator P. Fig. 10C shows an image of the back surface image data of the screen 303 after performing the binarization processing by the player specifying part 506. The player specifying part 506 stores the respective coordinates data of player specifying regions 1001A to 10001E. The player specifying part 506 determines which one of the player specifying regions 1001A to 100E the shape PS is included based on the coordinates of the pixels which constitute the shade PS and outputs a player identifier corresponding to the player specifying region including the shade PS.

Returning back to Fig. 9, the explanation of the flow chart is continued.

Finally, the position detecting part 503 outputs the positional information generated in step S903 to the game control part 502 and the player specifying part 506 outputs the player identifier generated in step S904 to the game control part 502 (step S905). The game control part 502 performs the necessary game processing based on the received positional information. For example, the game control part 502 performs a control such that the game control part 502 determines the positional information as the designation of anyone of the regions 701, 702, 703 for betting to "BANKER" , "PLAYER", "DRAW" and displays the image of the designated pile of chips 706 in the inside of the region. Further, the piles of chips 706 are displayed in color which corresponds to the identifier in accordance with the player identifier.

### [Player specifying region]

Next, the player specifying region is explained.

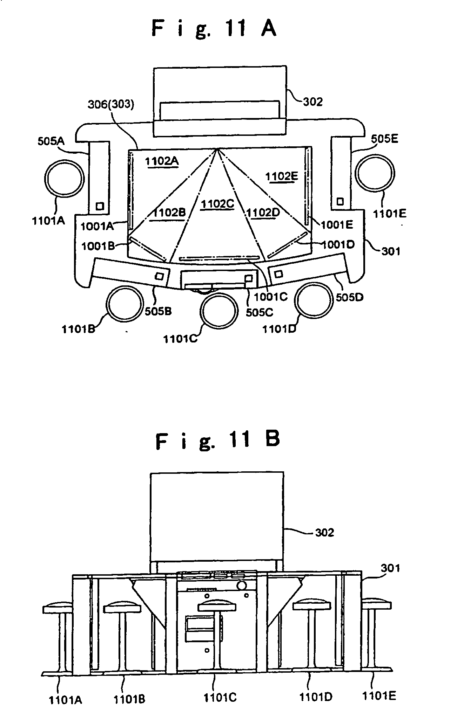

Fig. 11A is a plan view of the gaming machine 300 as viewed from above and is a view showing the player specifying regions 1001A to 1000E which are formed on a table screen 306, and Fig. 11B is a front view of the gaming machine 300 which corresponds to Fig. 11A.

The gaming machine 300 is provided with stools 1101A to 1101E which allow five players at maximum can sit and the region that each player's hand can reach is limited. In front of the sitting positions of the respective players, player terminal parts 505A to 505E which are incorporated in the table part 301 are provided. Each one of the player terminal portions 505A to 505E is provided with a betting button, a canceling button, a payout button (not shown in the drawing) and receives an inputting instruction from the player.

Regions 1102A to 1102E shown in Fig. 11A are regions which the respective player's hands reach. For example, the region 1102A is a region which the hand of the player who uses the stool 1101A reaches. When a certain position above the table screen 306 is indicated in the inside of the region 1102A, it is determined that the position is a position indicated by the player who uses the stool 1101A.

In respective regions 1102A to 1102E, the player specifying regions 1001A to 1001E are respectively set in end portions of the regions close to the player side. It is sufficient so long as the player specifying part 506 stores the positions and shapes of the player specifying regions 1001A to 1001E as coordinate data and it is unnecessary that the player specifying regions 1001A to 1001E are actually displayed on the table screen 306.

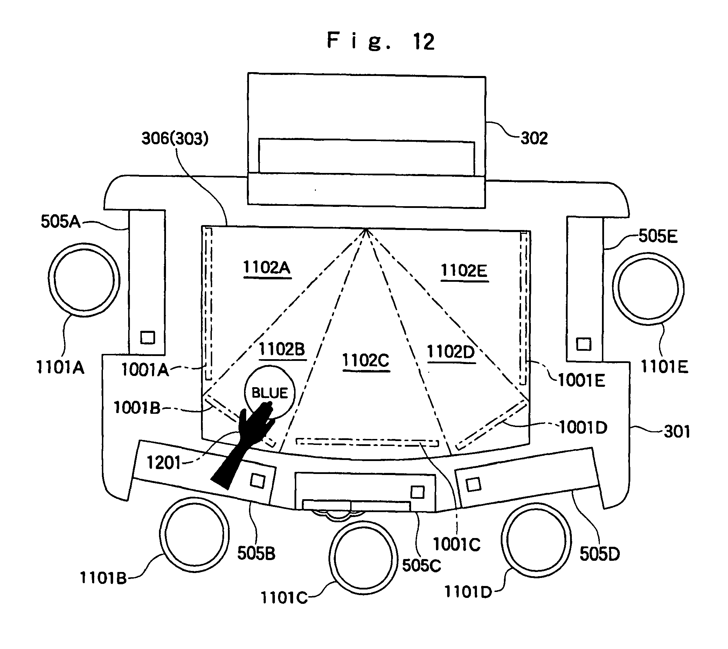

Fig. 12 is a view showing a state in which the player indicates the position in the region 1102B and is a plan view of the gaming machine 300 as viewed from above. In the example shown in the drawing, the player designates the position in the inside of the region 1102B on the table screen 306 with his/her hand 1201 which constitutes the indicator P. In this case, since the shade of the hand 1201 is included in the player specifying region 1001B, the player specifying part 506 determines the shade of the hand 1201 as the hand of the player (sitting on the stool 1101B and using the player terminal part 505B) corresponding to the player specifying region 1101B.

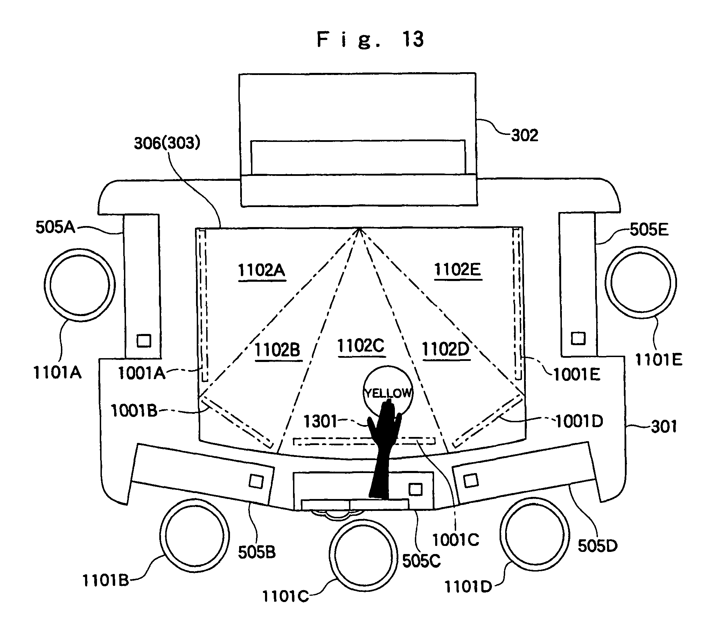

Fig. 13 shows a state in which the player indicates the position in the region 1102C. In the example shown in the drawing, the player designates the position in the inside of the region 1102C on the table screen 306 with his/her hand 1301 which constitutes the indicator P. In this case, since the shade of the hand 1301 is included in the player specifying region 1001C, the player specifying part 506 determines the shade of the hand 1301 as the hand of the player (sitting on the stool 1101C and using the player terminal part 505C) corresponding to the player specifying region 1001C.

According to this method, by respectively setting colors (for example, red, blue, yellow, green, white) which the respective players use, it is possible to display the colors on positions on the table screen which the positional information indicates based on the detected positional information.

According to the above-mentioned position detecting method, even when the plurality of players designate the positions on the table screen 306, it is possible to recognize the players corresponding to the respective indicated positions.

As described above, it is possible to realize the gaming machine 300 which can use the transmissive screen 303 which constitutes the screen unit 10 as the image display unit as well as the image input unit and, at the same time, can specify the players based on the inputting from the transmissive screen 303.

### {Modification of first specific embodiment}

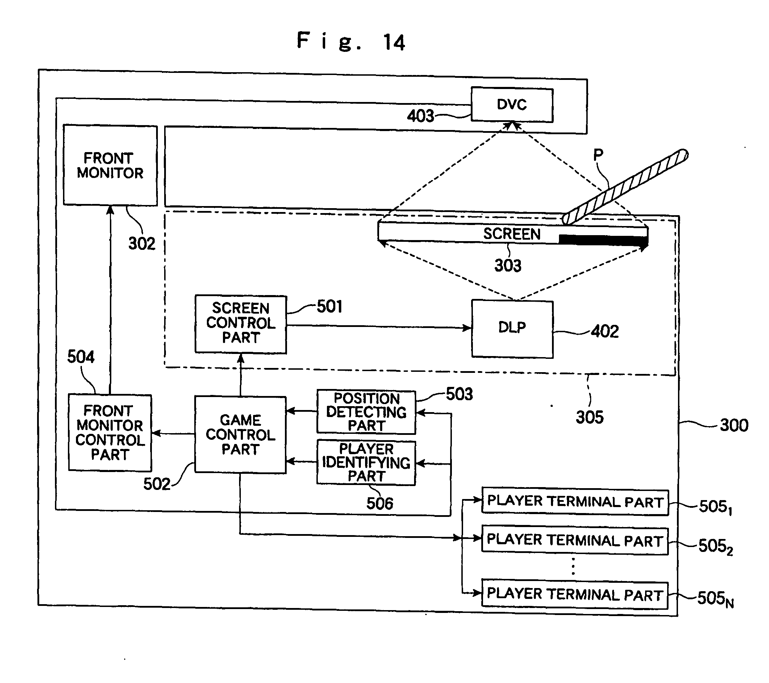

Fig. 14 shows the modification of the gaming machine 300. In this modification, the video camera 403 does not photograph the shade PS of the indicator P from above the table screen 305, but photographs the image containing the real image, and the position detecting part 503 determines the position indicated by the indicator P based on the real image. The gaming machine 300 of this modification is substantially equal to the gaming machine shown in Fig. 5 with respect to other constitutional elements and manner of operation.

### [Second specific embodiment]

Next, the second embodiment according to the present invention is explained. In the first embodiment, corresponding to the players , the piles of chips 706 displayed on the table screen 305 are displayed in a mode (for example, color, pattern, shape or the like of the chips) which differs from a mode of the piles of chips 706 of other player. However, the present invention also includes the constitution which displays an object to be displayed other than the piles of chips in modes different from each other corresponding to the results of the game of respective players.

In this embodiment, the regions 701, 702, 703 are displayed in different display modes in response to game results of respective players.

The gaming machine 300 according to this embodiment is similar to the gaming machine 300 of the first embodiment and performs the operation shown in Fig. 9 due to the constitution shown in Fig. 5 and Fig. 14. The gaming machine 300 according to the second embodiment instructs a command to the screen control part 501 such that the screen control part 501 displays the regions 701, 702, 703 which correspond to respective players in different display modes in response to the results of game of the respective players.

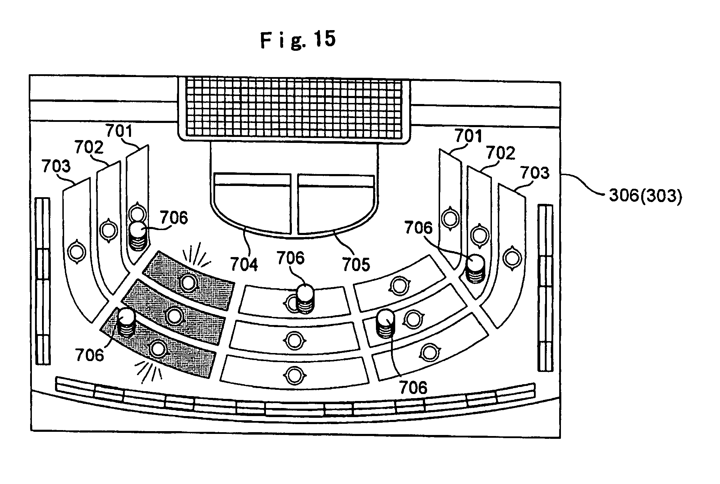

Fig. 15 is a view showing a display example of the table screen 305 in the second embodiment. In the example shown in the drawing, there is shown a mode in which in a state that the second player from the left facing the gaming machine wins the game, one of the regions 701, 702, 703 which corresponds to the second player is displayed in a flickering manner with color (for example, yellow) different from color (for example, green) which is usually displayed.

Here, the display mode is not limited to this example and any display mode is available provided that the regions 701, 702, 703 are displayed corresponding to the results of the game of respective players. That is, various modes can be adopted. For example, only frames which surround the regions 701, 702, 703 may be flickered. Alternatively, while the display modes of the regions 701, 702, 703 which correspond to the players who win the game are set equal to the usual display mode, the display modes of the regions 701, 702, 703 which correspond to the players who lose the game are changed (for example, the brightness is lowered than the usual brightness).

Here, the results of the game may be the results of the respective individual games or a total of a plurality of continuous individual games (for example, plus/minus of chip credit which the player has in hand after finishing of 10 games counted from the starting of the game.

In this embodiment, the above-mentioned "results of game" do not simply classify the display mode based on only the winning or the losing. That is, on the premise that the player wins the game, the display mode is made different whether the winning acquires the specified number of chips or not.

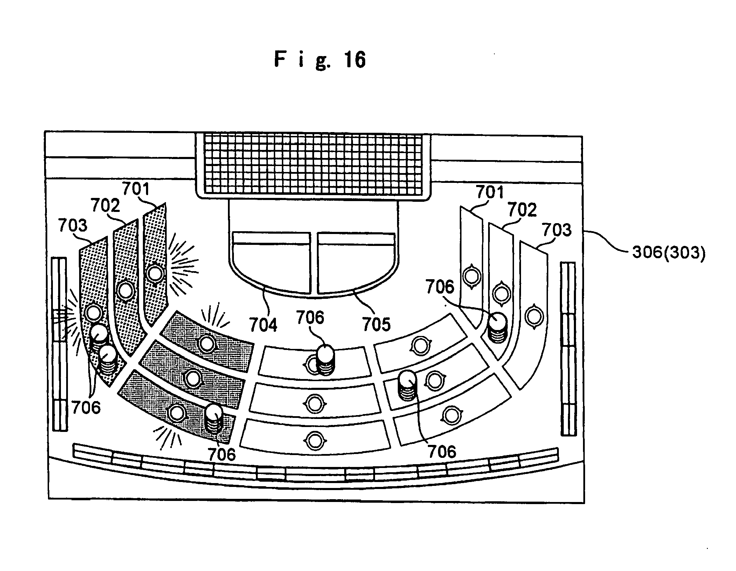

Fig. 16 shows a display example of the table screen 305 in which the player who wins the game with the number of chips which exceeds the specified number and the player who wins the game with the number of chips which does not exceed the specified number are determined.

In the example shown in this drawing, the first player from the left facing the gaming machine 300 wins the game with the number of chips which exceeds the specified number of chips (for example, 1000 chips) and the second player from the left facing the gaming machine 300 wins the game with the number of chips which exceeds the specified number of chips. In the table screen 305, one of the regions 701, 702, 703 which corresponds to the first player from the left is displayed in a flickering manner with color (for example, silver) different from color (for example, green) which is usually displayed and, at the same time, one of the regions 701, 702, 703 which corresponds to the second player from the left is displayed in a flickering manner with color (for example, gold) different from color (for example, green) which is usually displayed and also different from the color displayed in one of the regions 701, 702, 703 which corresponds to the first player.

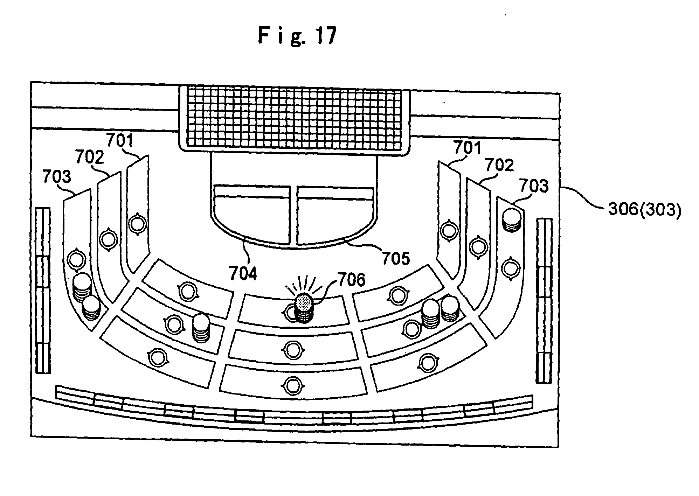

Further, although the regions 701, 702, 703 are used as objects in which the display modes are different from each other, even when the regions 701, 702, 703 are not used, any display modes are available provided that the players can be specified. For example, the display modes of the chips 706 may be made different from each other corresponding to the results of the game of the players. Fig. 17 is a view showing a display example of the table screen 305 when the display modes of the chips 706 are made different from each other corresponding to the results of the game of the players. In this example, the third player from the left facing the gaming machine 300 win the game and shows a mode in which the chips 706 are displayed in a flickering manner with color (for example yellowish white) different from the color (for example, white) with which the chips 706 are usually displayed.

Further, it is not always necessary to use all regions 701, 702, 703 as the objects in which the display modes are made different from each other, and the display modes may be made different from each other only by regions which are relevant to winning out of the regions 701, 702, 703, for example. For example, the result of the game turns out to be "TIE", the display mode may be made different only with respect to the region 701 which corresponds to "TIE".

### [Industrial Applicability]

The present invention is not limited to the gaming machine and is applicable to all devices and systems which perform the reception of inputting of the users by making use of the image display and the displayed image such as the image display system for presentation, the demonstration device for promoting sales and the like.

## Claims

1. A gaming machine adapted to allow a plurality of players to perform a game using a common game table simultaneously, the gaming machine (300) comprising:
a game table display means (10, 303) having a screen function adapted to display an image on a game which a projecting unit (20) projects, and having a light transmitting property;
**characterized by**:
an image taking means (40) adapted to take an image of a back surface of the game table display means (10, 303) in which a shade (PS) of an indicator (P) is formed and to generate image data of the back surface;
a position detecting means (50, 503) adapted to receive the image data, to detect a position of the shade (PS) of the indicator (P) in the game table display means (10, 303) based on the image data and to output a positional information of the indicator (P); and
a control means (60, 502) adapted to specify a region (701, 702, 703) of a bet button corresponding to the indicator (P) based on the positional relationship between the positional information of the indicator (P) and an image showing a region (701, 702, 703) of a bet button which is displayed on the game table display means (10, 303), and adapted to perform a control of the game based on the specified region (701, 702, 703) of the bet button.

2. A gaming machine according to claim 1, wherein the gaming machine (300) further comprises a light source (LS, 304A, 304B) adapted to form the shade (PS) of the indicator (P) on the game table display means (10, 303) on a front side of the game table display means (10, 303).

3. A gaming machine according to any one of claims 1 to 2, wherein the gaming machine (300) further comprises a game player specifying means (70, 506) adapted to output a player identifier specifying a player of a game corresponding to the indicator (P) based on the positional relationship between the positional information of the indicator (P) and the image on the game which is displayed in the game table display means (10, 303), and wherein the control means (60, 502) is further adapted to perform a control of the game based on the region (701, 702, 703) of the bet button and the player identifier.

## Patentansprüche

1. Spielautomat, der so eingerichtet ist, dass er es einer Vielzahl von Spielern gestattet, ein Spiel unter Verwendung eines gemeinsamen Spieltischs gleichzeitig durchzuführen, wobei der Spielautomat (300) umfasst:
eine Spieltisch-Anzeigeeinrichtung (10, 303), die über eine Bildschirmfunktion verfügt, die so eingerichtet ist, dass sie ein Bild zu einem Spiel anzeigt, das eine Projektionseinheit (20) projiziert, und die Lichtdurchlässigkeit aufweist;
**gekennzeichnet durch**
eine Bildaufnahmeeinrichtung (40), die so eingerichtet ist, dass sie ein Bild einer Rückseite der Spieltisch-Anzeigeeinrichtung (10, 303) aufnimmt, an der ein Schatten (PS) einer Zeigeeinrichtung (P) ausgebildet ist, und Bilddaten der Rückseite erzeugt;
eine Positionserfassungseinrichtung (50, 503), die so eingerichtet ist, dass sie die Bilddaten empfängt, eine Position des Schattens (PS) der Zeigeeinrichtung (P) in der Spieltisch-Anzeigeeinrichtung (10, 303) auf Basis der Bilddaten erfasst und Positionsinformationen der Zeigeeinrichtung (P) ausgibt; und
eine Steuereinrichtung (60, 502), die so eingerichtet ist, dass sie einen Bereich (701, 702, 703) eines Wetteinsatz-Knopfes, der der Zeigeeinrichtung (P) entspricht, auf Basis der Positionsbeziehung zwischen den Positionsinformationen der Zeigeeinrichtung (P) und einem Bild angibt, das einen Bereich (701, 702, 703) eines Wetteinsatz-Knopfes zeigt, das an der Spieltisch-Anzeigeeinrichtung (10, 303) angezeigt wird, und so eingerichtet ist, dass sie eine Steuerung des Spiels auf Basis des angegebenen Bereiches (701, 702, 703) des Wetteinsatz-Knopfes durchführt.

2. Spielautomat nach Anspruch 1, wobei der Spielautomat (300) des Weiteren eine Lichtquelle (LS, 304A, 304B) umfasst, die den Schatten (PS) der Zeigeeinrichtung (P) auf der Spieltisch-Anzeigeeinrichtung (10, 303) an einer Vorderseite der Spieltisch-Anzeigeeinrichtung (10, 303) erzeugt.

3. Spielautomat nach einem der Ansprüche 1 bis 2, wobei der Spielautomat (300) des Weiteren eine Spielteilnehmer-Angabeeinrichtung (70, 506) umfasst, die so eingerichtet ist, dass sie eine Spieler-Kennung ausgibt, die einen Spielteilnehmer, der der Zeigeeinrichtung (P) entspricht, auf Basis der Positionsbeziehung zwischen den Positionsinformationen der Zeigeeinrichtung (P) und dem Bild zu dem Spiel angibt, das in der Spieltisch-Anzeigeeinrichtung (10, 303) angezeigt wird, und die Steuereinrichtung (60, 502) des Weiteren so eingerichtet ist, dass sie eine Steuerung des Spiels auf Basis des Bereiches (701, 702, 703) des Wetteinsatz-Knopfes und der Spieler-Kennung durchführt.

## Revendications

1. Machine de jeu apte à permettre à plusieurs joueurs de jouer à un jeu en utilisant simultanément une table de jeu commune, la machine de jeu (300) comprenant :
des moyens d'affichage de table de jeu (10, 303) qui ont une fonction d'écran apte à afficher une image sur un jeu qu'une unité de projection (20) projette, et qui ont une propriété de transmission de lumière ;
**caractérisée par** :
des moyens de prise d'image (40) aptes à réaliser une image d'une surface arrière des moyens d'affichage de table de jeu (10, 303) dans lesquels une ombre (PS) d'un indicateur (P) est formée, et à générer des données d'image de la surface arrière ;
des moyens de détection de position (50, 503) aptes à recevoir les données d'image, à détecter une position de l'ombre (PS) de l'indicateur (P) dans les moyens d'affichage de table de jeu (10, 303) sur la base des données d'image, et à sortir des informations de position de l'indicateur (P) ; et
des moyens de commande (60, 502) aptes à spécifier une zone (701, 702, 703) d'un bouton de pari correspondant à l'indicateur (P), sur la base du rapport de position entre les informations de position de l'indicateur (P) et une image montrant une zone (701, 702, 703) d'un bouton de pari qui est affichée sur les moyens d'affichage de table de jeu (10, 303), et aptes à réaliser une commande du jeu sur la base de la zone (701, 702, 703) spécifiée du bouton de pari.

2. Machine de jeu selon la revendication 1, étant précisé que la machine de jeu (300) comprend par ailleurs une source de lumière (LS, 304A, 304B) apte à former l'ombre (PS) de l'indicateur (P) sur les moyens d'affichage de table de jeu (10, 303) sur un côté avant des moyens d'affichage de table de jeu (10, 303).

3. Machine de jeu selon l'une quelconque des revendications 1 à 2, étant précisé que la machine de jeu (300) comprend par ailleurs des moyens spécificateurs de joueur (70, 506) aptes à sortir un identifiant de joueur qui spécifie un joueur d'un jeu correspondant à l'indicateur (P) sur la base du rapport de position entre les informations de position de l'indicateur (P) et l'image sur le jeu qui est affichée sur les moyens d'affichage de table de jeu (10, 303), et que les moyens de commande (60, 502) sont par ailleurs aptes à réaliser une commande du jeu sur la base de la zone (701, 702, 703) du bouton de pari et de l'identifiant de joueur.
